# EUROPEAN PATENT SPECIFICATION

(11) **EP 1 368 642 B1**
(45) Date of publication and mention of the grant of the patent: **25.07.2007**
(21) Application number: 01923959.9
(22) Date of filing: 07.03.2001
(51) Int. Cl.: G01N 27/447, B01D 57/02

(54) **GEL PROCESSING AND TRANSFER DEVICE**
GELVERARBEITUNG UND TRANSFERVORRICHTUNG
DISPOSITIF DE TRAITEMENT SUR GEL ET DE TRANSFERT

(43) Date of publication of application: 10.12.2003
(73) Proprietor: Council of Scientific and Industrial Research;an Indian Reg. body incorporated under Reg. of Societies Act (Act XXI of 1860), New Delhi 110 001 (IN)
(72) Inventor: KUMAR, S., c/o Inst of Himalayan Bioresource Tech, Himachal Pradesh 176 061 (IN); VYAS, D., c/o Inst of Himalayan Bioresource Tech, Himachal Pradesh 176 061 (IN)
(74) Representative: Long, Edward Anthony
(86) International application number: PCT/IN2001/000032
(87) International publication number: WO 2002/071049

(56) References cited:
- EP-A- 0 293 658
- EP-A- 0 407 141
- WO-A-99/53303
- US-A- 4 877 510
- US-A- 5 217 592

## Description

### Technical Field

The present invention relates to a gel processing and transfer device. The device ensures un-damaged, intact gel while performing all the steps with agarose gel or the like that are involved after electrophoresis of nucleic acids or the like and before placing the gel onto the membrane for the purpose of transfer of nucleic acids or the like. Importantly, apparatus ensures un-damaged, intact gel during transfer and transportation of the gel from the device onto the membrane or like. The present invention also describes the method to use the apparatus.

### Background Art

One of the ways to separate macromolecules such as proteins, nucleic acids, charged sugars and peptides etc. is through electrophoresis wherein, electrical voltage is applied to the moieties to be separated and these move with different velocities in a solution depending upon their charge, size, shape and viscosity of the medium. To disallow diffusion of the macromolecules in solution due to convection currents, the solution is supported on a porous matrix.

A number of such matrices are available (Davis, M. G. 1986. Electrophoretic techniques. In A biologists guide to principles and techniques of practical biochemistry. (Wilson, K. and Goulding, K. H., eds.) 3rd Ed. English Language Book Society/Edward Arnold. London. pp. 245-268; Plummer, D. T. 1988. An introduction to practical biochemistry. 3rd Ed. Tata McGraw-Hill Publishing Company Limited, New Delhi, 332p). These include (a) paper, (b) cellulose acetate strip, (c) cellulose, silica, kieselguhr or alumina layered on a glass plate, and (d) various types of gel matrices. Gel as a supporting medium is a medium of choice in protein and nucleic acid research. This includes gels made from (a) starch, (b) agar (a mixture of agarose and agaropectin; dissolved by heating in a buffer medium to get the porous matrix), (c) agarose (a polymer of D-galactose and 3,6-anhydro L-galactose; dissolved by heating in a buffer medium to get the porous matrix), and (d) polyacrylamide.

Normally, agarose gel is a matrix of choice while working with nucleic acids. One of the requirements of working with nucleic acid is to transfer the separated nucleic acid from the gel matrix onto a membrane in a blotter. The blotter is an apparatus wherein the nucleic acids or the like are transferred from the gel onto the membrane. In a vacuum blotter, the process of transfer is assisted with the help of vacuum. This constitutes one of the most important steps of southern or northern blotting.

In southern blotting, deoxyribonucleic acid (hereinafter known as DNA) is digested with endonucleases followed by electrophoretic separation of the digested fragments on agarose gel and finally transfer of the digested DNA onto a membrane. To ease transfer of large-sized DNA from the gel onto the membrane, DNA strands need to be (i) cleaved using 0.25 M hydrochloric acid, (ii) denatured using 1.5 N sodium chloride/ 0.5 N sodium hydroxide to obtain single strand, and (iii) neutralized using 1.5 N sodium chloride/ 0.5 N tris-chloride (pH, 7.0) to allow proper binding of DNA onto the membrane onto which the transfer has to take place. After achieving these steps of processing, the gel needs to be placed onto a membrane to allow transfer of DNA from the gel onto the membrane (Ausubel, F. M., Brent, R., Kingston, R. E., Moore, D. D., Seidman, J. G., Smith, J. A. and Struhl, K. 1998. Current protocols in molecular biology. John Wiley & Sons, Inc. New York, pp. 2.8.1-2.9.15).

In northern blotting, ribonucleic acid (hereinafter known as RNA) is run on agarose gel that usually contains formaldehyde. For efficient transfer of RNA from the gel onto the membrane, RNA containing gel needs to be (i) washed several times with water, (ii) denatured using 1.5 N sodium chloride/ 0.05 N sodium hydroxide, (iii) neutralized using 1.5 N sodium chloride/ 0.5 N tris-chloride (pH, 7.4), (iv) soaked in 20 x SSC (3 M sodium chloride, 0.3 M sodium citrate; adjust pH to 7.0 with I M hydrochloric acid). After achieving these steps of processing, the gel needs to be placed onto a membrane to allow transfer of RNA from the gel onto the membrane (Ausubel, F. M., Brent, R., Kingston, R. E., Moore, D. D., Seidman, J. G., Smith, J. A. and Struhl, K. 1998. Current protocols in molecular biology. John Wiley & Sons, Inc. New York, pp. 4.9.1-4.9.16).

These processes are normally carried out in containers which are normally baking dish or in plastic box (Sambrook, J., Fritsch, E. F. and Maniatis T. 1989. Molecular cloning: A laboratory manual. 2nd Ed. Cold Spring Harbour Laboratory Press. New York; Ausubel, F. M., Brent, R., Kingston, R. E., Moore, D. D., Seidman, J. G., Smith, J. A. and Struhl, K. 1998. Current protocols in molecular biology. John Wiley & Sons, Inc. New York). While changing various solutions as mentioned in the above paragraph, the container is tilted to remove the solution. The gel needs to be held by hand to avoid falling of the gel along with the solution. Secondly, after giving various washes with different solutions as mentioned in the above paragraph, the gel has to taken out from the container to be placed over the membrane. This second process leads to the damage of the delicate gel. Also, the gel has to be placed onto the membrane properly and once kept onto the membrane, the gel can not be moved.

As recognized herein, the agarose gel holding precious samples of DNA or RNA is delicate and fragile, and liable to damage during various steps mentioned above. The risk of damage increases with increase in the size of the gel. Particularly, during the processing of large number of samples, the size of the gel may be as big as, but not limited to, measuring 15 x 22 centimeter (width x length).

This dictates the development of a gel processing and transfer device that ensures intact gel during various processes as described above.

Also, while working with proteins, the staining of the proteins requires several solutions to be changed one after another and once the proteins are stained, the photography of the gel is essential to record the data (Hames, B. D. 1990. One dimensional polyacrylamide gel electrophoresis. In Gel electrophoresis of proteins: A practical approach. (Hames, B. D. and Rickwood, D., eds.) 2nd Ed. IRL Press at Oxford University Press, Oxford. pp. 1-147). This also dictates the development of such device, wherein intactness of the gel should be ensured during staining protocols and the device should be capable of presenting the gel for the purpose of photography.

Such a device could not be found with various firms dealing with laboratory products. The catalogue of the following firms were scanned:
(a) Fisher Scientific, 585 Alpha Dr., Pittsburgh, PA, 15205-9913, USA.
(b) Cole-Parmer, Instrument company, 625 East Bunker Court, Vernon Hills, Illinois 60061-1844. USA.
(c) Becton Dickinson Labware, Two Oak Park, Bedford, MA 01730-9902, USA.
(d) Amersham Pharmacia Biotech UK Ltd., Amersham Place, Little Chalfont, Buckinghamshire, HP7 9NA, England.
(e) Brand GMBH + CO KG, Laboratory Equipment Manufactures, P. O. Box 1155 D-97861 Wertheim Germany.
(f) Sigma Chemical Co. P. O. Box 14508 St. Louis, MO 63178 USA.
(g) Gibco BRL Life Technologies 9880 Medical Centre Drive P. O. Box 6482 Rockville, MD 20849-648.
(h) Consort Ltd. Parklaan 36 B-2300 Turnhout, Belgium.
(i) Bio-Rad Laboratories 2000 Alfred Nobel Drive, Hercules, California 94547.
(j) S. D. Fine-Chem Ltd. 315-317, T.V. Industrial Estate, 248 Worli Road, Mumbai 400025 India.
(k) Tarsons Products Pvt. Ltd. 856 Marshell House, 33/1 Netaji Subash Road, Calcutta 700001 India.
(l) Imperial Bio-Medics, Show Room No. 36, Sector-26, Madhya Marg, Chandigarh 160019 India.
(m) Bangalore Genei Pvt. Ltd., No. 6, 6^{th} Main, BDA Industrial Suburb, Near SRS Road, Peenya, Bangalore 560058 India.

Product number Z 35,829-0 and Z 35,830-4 by M/s Sigma Chemical Co, USA and product number 482030 by M/s Tarsons Products Pvt. Ltd., India describe a gel staining tray. However, the product is basically a plastic box structure with an outlet at the base and has the following shortcomings:
1. The product can accommodate a limited-sized gel
2. The gel is broken during transfer from the product onto a blotter

Since the Product number Z 35,829-0 and Z 35,830-4 by M/s Sigma Chemical Co, USA is also similar to the one by M/s. Tarsons Products Pvt. Ltd., India (product number 482030) apart from the size, end result is likely to be the same.)

Thus, there is no gel processing and transfer device that ensures intact gel (i) during various processes that are involved after electrophoresis of nucleic acids and before placing the gel onto the membrane for the purpose of transfer of nucleic acid, and (ii) during transfer of the gel from the device onto the membrane. The patent search has been conducted to survey the existing patents relating to the use of processing and transfer of gels. The critical study of the prior patents indicates that none of them is, somehow, not at all connected to the type of applications the present invention is intended to. A new device which is being planned to be launched by the applicant would be a service through which users would be accessed to a device which will help processing and transfer of gels with minimal handling. This object of invention would be the first of its kind.

### Object of the Invention

The main objects of the present invention is to provide a gel processing and transferring device.

Another object of the present invention is to provide a gel processing device which requires least handling.

### Summary of the invention

The present invention relates to a gel processing and transferring device useful for the processing and transferring of gels with minimal handling.

In a preferred form, the gel processing and transfer device, useful for the processing and transferring of the gels with minimal handling, has at least four separable components namely, (i) a base plate for holding the gels with the facility to drain out solution, (ii) a retaining rim with attached side-walls, said side walls being fastened to the base plate by a fastening means, (iii) at least one "0", ring fixed to the retaining rim to give leak proof arrangement, and (iv) a lid to cover the assembly.

Preferably the dimension of the base plate depends upon the size of the gel to be transferred from the electrophoresis tray to the base plate. In one preferred form the base plate is composed of materials selected from the group comprising of, polycarbonate, acrylic, plexiglas, glass, plastic, polyethylene, polypropylene, polyester, polymethacrylate, poly(1,4-cyclohexylene dimethylene terephthalate)glycol and metals.

Preferably the base plate has a thickness of at least 1 mm and one of the ends of the base plate is shaped in the form of wedge to ease transfer of the gel from the base plate onto a membrane.

Preferably the base plate has a drain-out device to decant the poured solution and in one form the drain-out device has a hole formed in the base plate and a nozzle is attached to the hole. In one preferred form, the nozzle is composed of materials selected from the group comprising of, polycarbonate, acrylic, plexiglas, glass, plastic, polyethylene, polypropylene, polyester, polymethacrylate, poly(1,4-cyclohexylene dimethylene terephthalate)glycol and metals.

Preferably the nozzle has a tubing attached to it and preferably the tubing is composed of a material selected from the group comprising of rubber, latex rubber, silicone, platinum-cured silicone (for high purity and no peroxides), C-Flex (an opaque white thermoplastic elastomer formulated from styrene-ethylene-butadiene-styrene block co-polymer, low density polyethylene, fluorinated ethylene-propylene, teflon polytetrafluoroethylene and silicone.

Preferably the tube has a length with an inner diameter that fits closely onto the open end of the nozzle and is fixed with a clamp to control the flow of the solution.

In a modification the base plate can include any type of the drain out facility to decant the poured solution.

Preferably also the retaining rim has dimension depending upon the size of the gel used and the rim can be composed of a material selected from the group consisting of, polycarbonate; acrylic, plexiglas, glass, plastic, polyethylene, polypropylene, polyester, polymethacrylate, poly(1,4-cyclohexylene dimethylene terephthalate)glycol and metals.

Preferably the retaining rim has a thickness of at least 1 mm and has sidewalls of height of at least 1 cm.

Preferably the sidewalls are attached perpendicular to horizontal plates and are 2cm wide from the horizontal plates to ensure that the horizontal plates are always outside the sidewalls.

Preferably the sidewalls of the retaining rim are attached to the base plate in a manner that 2 mm of side-walls will protrude below the horizontal plate.

In a modification, the base plate and retaining rim are fastened together by any of the conventional methods and the fastening mechanism can be selected from the group comprising of nut and bolts, clamps, bolts with plastic fitted caps and nuts engraved in the base plate.

Preferably the composition of the fastening mechanism is selected from the material comprising of the group acrylic, plexiglas, glass, plastic; polyethylene, polypropylene, polyester, polymethacrylate, poly(1,4-cyclohexylenedimethyleneterephthalate) glycol and metals.

Preferably the retaining rim is provided with at least one "0" ring to avoid leakage of solution from the assembly of the base plate and the retaining rim. The "0" ring is preferably composed of a material selected from the group comprising rubber, latex rubber, silicone, platinum-cured silicone (for high purity and no peroxides), C-Flex (an opaque white thermoplastic elastomer formulated from styrene-ethylene-butadiene-styrene block co-polymer), low density polyethylene, fluorinated ethylene-propylene, teflon polytetrafluoroethylene and silicone.

Preferably the "0" ring is fitted around the protruded portion of the side walls of the retaining rim, but optionally can be placed inside the grove of the base plate.

Preferably the type of lid depends upon the size of the assembly made by the sidewalls of the retaining rim and is composed of a material selected from the group comprising of polycarbonate, acrylic, plexiglas, glass, plastic, polyethylene, polypropylene, polyester, polymethacrylate, poly (1,4-cyclohexylene dimethylene terephthalate) glycol and metals.

Preferably the lid has a thickness of at least 1 mm and preferably the lid can rest on the top of sidewalls of the retaining rim and can be easily covered and removed.

Preferably the lid has at least four protrusions which will engage with the outside of the side walls of the retaining rim. The dimension and shape of the protrusions depend upon the height of the side walls or the retaining rim.

Preferably the protrusions are formed from a material, from a group consisting of, polycarbonate, acrylic, plexiglas, glass, plastic, polyethylene, polypropylene, polyester, polymethacrylate, poly(1,4- cyclohexylene dimethylenetyrephthalate)glycol or metal *of* choice, but is not limited to the said group.

Preferably the protrusions have a thickness of at least 1mm.

Preferably the component parts are moulded and/or constructed with autoclavable material to ensure sterile environment to the gel.

In one another embodiment of the present invention, the whole unit or individual components, could be a part of the automation unit leading to robotic-gel-transfer.

In another form, the component parts of device may be constructed with metal with no heat-sensitive component to enable use in the food industry such as to be useful to bake cake, bread and/or the like with no damage to the product.

The device can also be used to provide a desired shape to jelly and/or the like material.

Preferably the device is transparent to various lights, translucent, opaque, impermeable to light or the like material.

### Brief Description of the Drawings

Figure I is an overall view of the gel processing and transfer device.

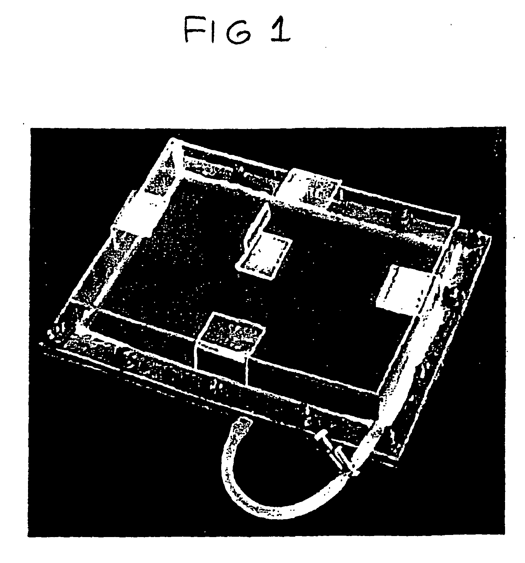

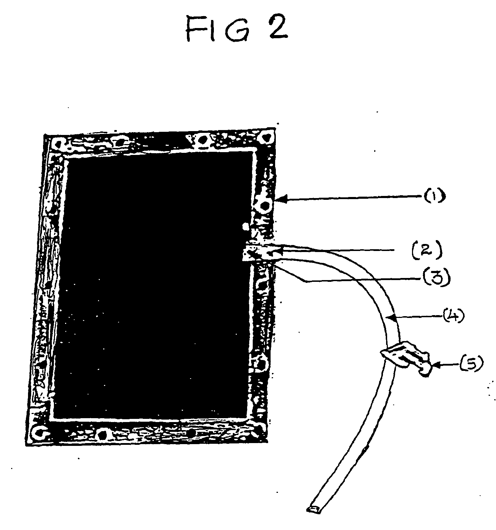

Figure 2 is a view of the base plate which has a drain-out facility for solution.
Figure 3 is a view of the drain-out facility for solution in the base plate.
Figure 3A is an enlarged cross sectional view of a portion of the view illustrated in Figure 3.

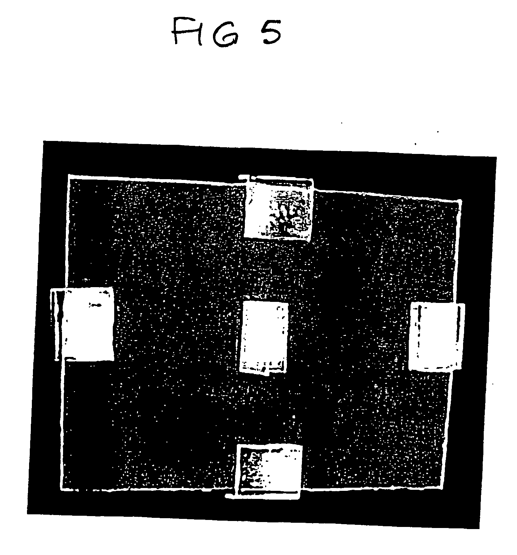

Figure 4 is a view of the retaining rim.

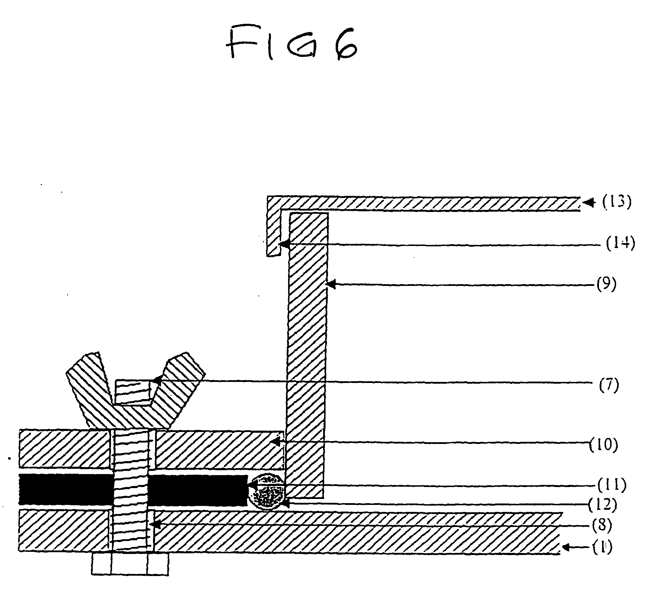

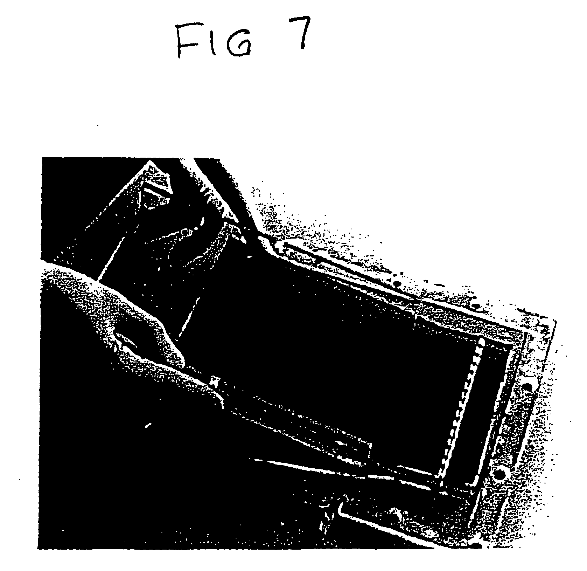

Figure 5 is a view of the lid.
Figure 6 is an enlarged cross-sectional view of a portion of the device.

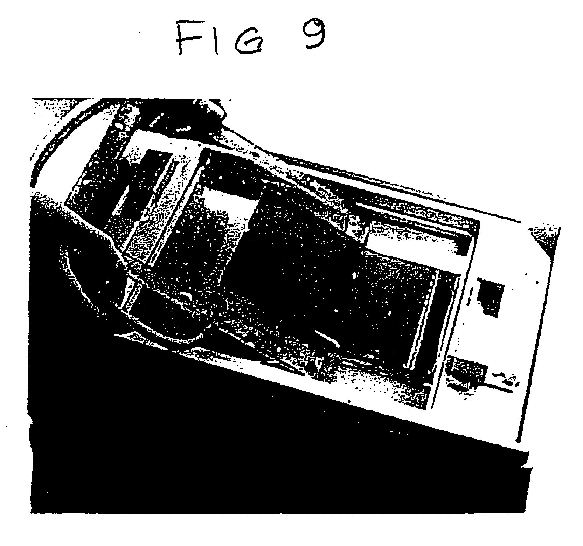

Figure 7 is an exploded view of the component parts of the device.

The following examples are given by the way of illustration of the device of the present invention and it should not be construed to limit the scope of the present invention.

### EXAMPLE 1

### General method for construction of the device

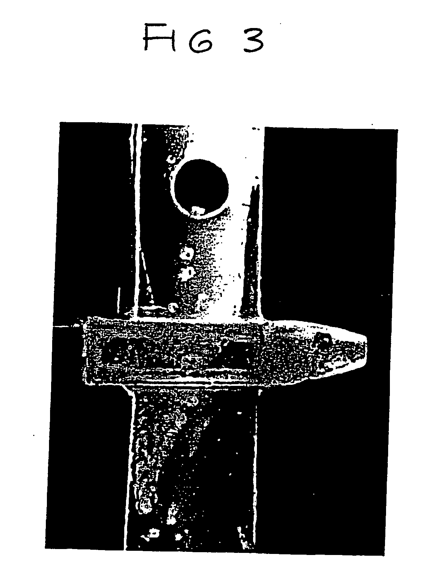

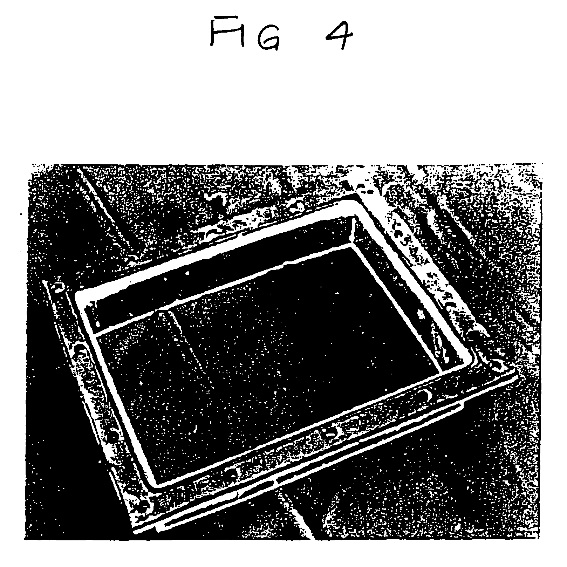

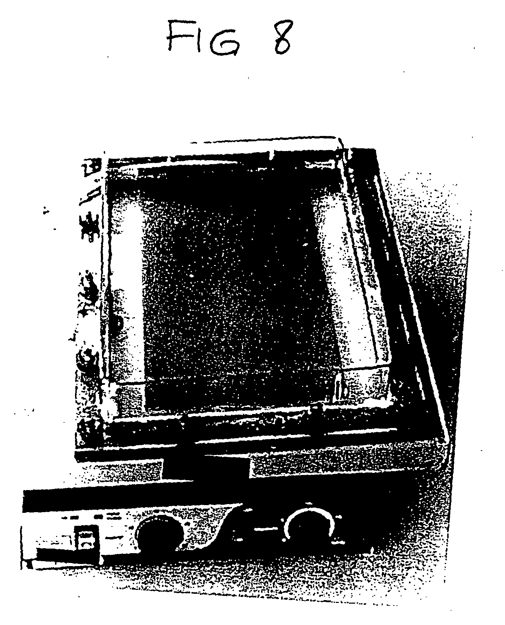

The present invention provides with an apparatus, a gel processing and transfer device, that consists of at least four separable components. As illustrated in the drawings, the base plate (1) has a nozzle (2) attached to the rectangular hole (3) (see Figure 3). A silicone tubing (4) along with a clamp (not shown in the drawings) is fixed onto the open end of the nozzle. As more specifically illustrated in figures 6 and 10, a retaining rim (6) is attached to the base plate using nuts and bolts (7). Holes (8) are drilled on the outer edge of the base plate and the retaining rim for fastening nuts and bolts. The retaining rim has four side walls (9) joined perpendicularly to the retaining rim in such a way that side walls protrude below the retaining rim. A rubber strip 11 is fixed outside the protrusion on the lower side of the horizontal plate. An "0" ring (12) is located in the space created by the protrusion of the side-walls and the horizontal plate of the retaining rim

After fastening the base plate and the retaining rim, the lid (13) is placed over the side walls of the retaining rim. The lid remains fixed onto the assembly with the help of at least four protrusions (14) attached to the lid.

### EXAMPLE 2

### Preparation of the base plate

The base plate was prepared using a 2 mm thick polycarbonate sheet, cut with the help of hexagonal blade exactly to size. To give strength to the edges a 2 cm wide and 2 mm thick polycarbonate sheet is glued using chloroform (organic solvent), to the base plate. A drain out facility is made in the base plate by making a 0.5 x 0.5 cm hole on 28 cm long side of the base plate at a distance of 11 cm from one end of the length. Width-wise, the hole is placed at a distance of 19.5 cm from one end of the 22 cm wide base plate. To the hole a small nozzle measuring 4.5 cm is attached. The nozzle is prepared with the pieces of 2 mm thick polycarbonate sheet, cut to fit the size. To the nozzle a silicone tube. 30 mm in length, is fitted to the open end of the nozzle (with inner diameter of 0.6 cm).. A clamp is placed onto the silicone tube to control the flow of solution.

To fasten the base plate, to the retaining rim; holes (diameter 1 cm) are drilled on the base plate, at a distance of 1 cm from the outer edge in both the directions. A total of 5 holes arc drilled on the side measuring 28 cm and a total of 4 holes are drilled on the side measuring 22 cm. The holes at the corners are common on length and width-wise.

### EXAMPLE 3

### Preparation of the retaining rim

The retaining rim of the object of invention is prepared using 2 mm thick polycarbonate sheet measuring 28 x 22 cm in outer dimension. The inner plate of 24 x 18 cm was cut and removed from the overall plate to give a gasket of polycarbonate. A similar gasket was cut from a different plate and glued onto the first to give additional strength to the retaining rim. The side walls of retaining rim are made from a single 84 cm long and 4 cm wide piece of 2 mm thick polycarbonate, bent at 3 corners at an angle of 90° to obtain a rectangular structure. The side-walls of retaining rim thus formed brings two free ends of the polycarbonate piece together to allow joining. The side-walls of retaining rim is attached perpendicularly to 2 cm wide horizontal plates in such a way that the horizontal plates are always outside the retaining rim. Attachment of side-walls of retaining rim with the horizontal plate, is performed in such a way that 2mm of side-walls always protrude below the horizontal plate. This arrangement gives an effective height of 4.2 cm to the retaining rim.

After fastening the nuts and bolts to the retaining rim and the base plate, the assembly looks like an open rectangular box that forms an enclosure offering an effective space of 24 x 18 cm onto the base plate.

### EXAMPLE 4

### Preparation of no-solution-leak system

To check the leakage from the apparatus a rubber "0" ring (4 millimeters thickness) is placed under the retaining rim. The "0" ring is placed in the space provided by the protrusion of side walls to the horizontal plates of the retaining rim. Since the horizontal plate of the side rim actually sits on the base plate, the placing of an "0" ring on the retaining rim creates a gap, which may lead to damage of horizontal plates during fastening with nut and bolts. To avoid this a rubber strip 11, is located between the retaining rim and the base place on the outer side of the "O" ring 12. Such an arrangement resulted into a "no-solution-leak" system.

### EXAMPLE 5

### Preparation of the lid

The lid is an important component of the object of invention and provides safety to the gel and to the solution in the object of invention. Also, it will check evaporation of solutions from the device.

The lid measuring 24 x 18 cm is constructed using a 2mm thick polycarbonate sheet. To avoid slipping of the lid from top of the retailing rim- a 2.5 cm long and 4.0 cm wide protrusion made with polycarbonate is fixed onto the top of the lid. The protrusion covers the retaining rim from out-side and fixes the lid on to the side walls of the retaining rim in the complete assembly. A folded piece of poly carbonate was fixed in the center of the lid to give a handle for lid and eases its movement.

### EXAMPLE 6

### Method to use the device

The following describes a method to use the device for the agarose gel or the like containing nucleic acids or the like. The following sequence should be followed :
(i) Autoclave the complete assembly of the object of invention.
(ii) If nucleic acid to be used is RNA, treat the whole assembly with diethyl pyrocarbonate treated (0.1 %) water for 12-16 hours before autoclaving.
(iii) Keep the gel to be transferred ready.
(iv) Remove the lid of the device and keep aside.
(v) Remove retaining rim of the device by unscrewing nut and bolts.
(vi) Base plate is now exposed and is ready to accept the gel.
(vii) Bring the tray containing gel to be transferred on the top of base plate.
(viii) While holding the gel tray with both the hands, tilt the tray from the from and bring it very close (almost touching) to the base plate.
(ix) While holding the tray, give light push to the gel with the help of the thumb. Concomitantly, the gel tray should be pulled away from the gel.
(xi) After a few seconds, the gel from the gel tray will be transferred onto the base plate.
(xii) Place the retaining rim onto the base plate.
(xiii) Fasten the retaining rim with the help of nut and bolts.
(xiv) Ensure that clamp on the drain-out tube is tight enough to avoid leakage of any solution.
(xv) Pour the required solution.
(xvi) As per the need, whole of the assembly may be kept over a shaker.
(xvii) To remove the poured solution, the clamp on the drain-out pipe should be loosened.
(xviii) Once the solution is drained out, fasten the clamp and pour the solution.
(xix) Perform such steps as per the protocol of your choice.
(xx) Cover and uncover the lid as and when required.
(xxi) Once the processing is over, remove: lid.
(xxii) Remove nut bolts or any fastening mechanism.
(xxiii) Remove retaining rim.
(xxiv) Take the base plate containing the gel near to a blotter.
(xxv) Position the base plate onto the blotter where the gel has to be transferred.
(xxvi) While holding the base plate with both hands, tilt the base from the front and bring it very close (almost touching) to the place where the gel needs to be transferred.
(xxvii) While holding the base plate, give light push to the gel with the help of thumb. It is also possible to hold the base plate with one hand and use another hand to push the gel slowly for its transfer onto the blotting surface.
(xxviii) Concomitantly, the base plate should be pulled away from the gel.
(xxix) After a few seconds, the gel from the base plate stands transferred onto the blotting surface.
(xxx) If the purpose is not to transfer the gel onto the blotting surface but to photograph the gel, then perform the following, sequence following step number (xx) onwards:
   (a) Bring the device near the photography unit;
   (b) Uncover the lid;
   (c) Remove the solution from the apparatus;
   (d) During draining out of the solution, ensure that the gel is properly spread
   (e) Remove the retaining rim es in steps (xxii) and (xxiii) above; and
   (f) Since base plate is a transparent surface, the photography can easily be performed.
(xxxi) During processing of the gel, the drain-out tube can easily be fitted tightly in the space between nut and bolt and the side walls of the retaining rim.

### The main advantages of the present invention are:

The invention provides a gel processing and transfer device wherein both the features that is, the processing and the transfer capabilities are present in the same device that ensures intact gel during various processes that are involved after electrophoresis of nucleic acids and before placing the gel onto the membrane for the purpose of transfer of nucleic acid, and while transferring the gel from the device onto the membrane.

The device has the following characteristics and uses:
(a) Autoclavable at 121°C under a pressure of 1.1 kg per square centimeters to ensure sterile environment to the gel;
(b) solutions can be drained out without tilting of the device:
(c) suitable for processing not only for agarose gel but also for other gels such as, but not limited to, polyacrylamide gels;
(d) suitable for staining the gels such as, but not limited to, staining proteins and nucleic acids using the recommended staining procedures;
(e) safe system for gel transportation from one place to another for the purpose such as, but not limited to, for taking permanent impressions of the gel for records;
(f) safe system for photography of the gel wherein after staining the gel, the gel need not to be tempered with for the purpose of clicking the photograph; and
(g) transparent system for easy visibility.

## Claims

1. A gel processing and transfer device for the processing and transferring of gels with minimal handling **characterized in that** the device comprises, in combination, the following elements:-
a base plate (1) for holding the gels on an upper surface area, said base plate (1) including a drain;
a retaining rim (6) having side walls joined perpendicularly to a horizontal plate (10) such that the side walls (9) extend vertically upwards from the horizontal plate (10) and protrude vertically downwards from the horizontal plate (10), said horizontal plate of the retaining rim (6) being adapted to be fastened by fastening means (7) to the perimeter of the base plate (1) for retaining the gel within the upper surface area of the base plate;
at least one 'O' -ring (12) being provided in a room created between the horizontal (6) plate, the side walls (9) and the base plate (1) for providing leak proof seal;
a lid (13) adapted to engage over the side walls (9), and one end of the base plate (1) is shaped in the form of wedge to ease transfer of the gel from the base plate (1) onto a membrane.

2. A device as claimed in claim 1, wherein the base plate (1) is composed of a material selected from the group comprising of, polycarbonate, acrylic, Plexiglas, glass, plastic, polyethylene, polypropylene, polyester, polymethacrylate, poly(1,4-cyclohexylene dimethylene terephthalate) glycol and metals.

3. A device as claimed in claim 1 or claim 2, wherein the base plate (1) has a thickness of at least 1 mm.

4. A device as claimed in any preceding claim, wherein the drain comprises a hole formed in the base plate (1) and a nozzle (2) attached to the base plate (1) to surround the hole.

5. A device as claimed in claim 4, wherein the nozzle (2) is constructed of a material selected from the group comprising of, polycarbonate, acrylic, Plexiglas, glass, plastic, polyethylene, polypropylene, polyester, polymethacrylate, poly (1,4-cyclohexylene dimethylene terphthalate) glycol and metals.

6. A device as claimed in claim 4 or claim 5, wherein a tube (4) is attached to the nozzle (2).

7. A device as claimed in claim 6, wherein the tube (4) is composed of a material selected from the group comprising of, rubber, latex rubber, silicone, platinum-cured silicone for high purity and no peroxides, C-Flex which is an opaque white thermoplastic elastomer formulated from styrene-ethylene-butadiene-styrene block co-polymer, low density polyethylene fluorinated ethylene-propylene, Teflon, polytetrafluoroethylene and silicone.

8. A device as claimed in claim 6 or claim 7, wherein the tube (4) has inner diameter to fit to the nozzle (2) and the tube (4) is provided with a clamp to control the flow of the solution through the nozzle (2).

9. A device as claimed in any preceding claim, wherein the retaining rim is composed of a material selected from the group consisting of, polycarbonate, acrylic, Plexiglas, plastic, polyethylene, polypropylene, polyester, polymethacrylate, poly (1,4-cyclohexylene dimethylene terephthalate) glycol and metals.

10. A device as claimed in any preceding claim, wherein the retaining rim, has a thickness of at least 1mm.

11. A device as claimed in any preceding claim, wherein a rubber strip (11) is located between the retaining rim, and the base plate (1) on the outer side of the "O" ring (12).

12. A device as claimed in claim 11, wherein the elastomeric strip (10) is formed, from a rubber.

13. A device as claimed in any preceding claim, wherein at least four protrusions (14) are attached to the lid (13) to maintain the lid (13) in place.

14. A device as claimed in any preceding claim, wherein the lid (13) includes protrusions adapted to engage with the outside of the side walls of the retaining rim.

## Patentansprüche

1. Gelverarbeitungs- und Transfervorrichtung zur Verarbeitung und zum Transfer von Gelen mit minimalem Handlingaufwand, **dadurch gekennzeichnet, dass** die Vorrichtung in Kombination die folgenden Elemente aufweist:
eine Basisplatte (1), um die Gele auf einem oberen Oberflächenbereich zu halten, wobei die Basisplatte (1) einen Auslass aufweist;
einen Rückhalterand (6), welcher senkrecht an eine Horizontalplatte (10) angeschlossene Seitenwände (9) dergestalt aufweist, dass sich die Seitenwände (9) senkrecht vertikal aufwärts von der Horizontalplatte (10) erstrecken und senkrecht vertikal abwärts über die Horizontalplatte (10) überstehen, wobei die Horizontalplatte (10) des Rückhalterandes (6) eingerichtet ist, um mit Hilfe von Befestigungsmitteln (7) am Außenumfang der Basisplatte (1) festgelegt zu werden, damit das Gel innerhalb des oberen Oberflächenbereiches der Basisplatte (1) zurückgehalten wird;
wenigstens einen O-Ring (12), welcher in einem zwischen der Horizontalplatte (10), den Seitenwänden (9) und der Basisplatte (1) gebildeten Raum gehalten wird, um eine lecksichere Abdichtung zur Verfügung zu stellen; und
einen die Seitenwände (9) übergreifenden Deckel (13), wobei
ein Ende der Basisplatte (1) die Gestalt eines Keiles aufweist, um einen einfachen Transfer des Gels von der Basisplatte (1) auf eine Membran zu ermöglichen.

2. Vorrichtung nach Anspruch 1, **dadurch gekennzeichnet, dass** die Basisplatte (1) aus einem Material zusammengesetzt ist, welches der Gruppe aus Polykarbonat, Acryl, Plexiglas, Glas, Plastik, Polyethylen, Polypropylen, Polyester, Polymethacrylat, Poly(1,4-Cyclohexylen Dimethylenterephthalat), Glykol und Metallen entstammt.

3. Vorrichtung nach Anspruch 1 oder 2, **dadurch gekennzeichnet, dass** die Basisplatte (1) eine Dicke von wenigstens 1 mm aufweist.

4. Vorrichtung nach einem der vorhergehenden Ansprüche, **dadurch gekennzeichnet, dass** der Auslass ein in der Basisplatte (1) geformtes Loch und eine Düse (2) aufweist, welche an die Basisplatte (1) angeschlossen ist und das Loch umgibt.

5. Vorrichtung nach Anspruch 4, **dadurch gekennzeichnet, dass** die Düse (2) aus einem Material konstruiert ist, welches der Gruppe enthaltend Polycarbonat, Acryl, Plexiglas, Glas, Plastik, Polyethylen, Polypropylen, Polyester, Polymethacrylat, Poly(1,4-Cyclohexylen Dimethylenterephthalat), Glykol und Metallen entstammt.

6. Vorrichtung nach Anspruch 4 oder 5, **dadurch gekennzeichnet, dass** ein Schlauch (4) an die Düse (2) angeschlossen ist.

7. Vorrichtung nach Anspruch 6, **dadurch gekennzeichnet, dass** der Schlauch (4) aus einem Material aufgebaut ist, welches der Gruppe aus Gummi, Latexgummi, Silikon, mit Platin versetztem Silikon für hohe Reinheit und ohne Peroxide, C-Flex, welches ein opakes weißes thermoplastisches Elastomer, hergestellt aus Styrenthylen-Butadien-Styren Block Copolymer ist, Low Density Polyehtylen Fluorethylenpropylen, Teflon, Polytetrafluorethylen und Silikon entstammt.

8. Vorrichtung nach Anspruch 6 oder 7, **dadurch gekennzeichnet, dass** der Schlauch (4) einen inneren Durchmesser aufweist, um auf die Düse (2) zu passen und im Übrigen mit einer Klemme ausgerüstet ist, um den Fluss der Lösung durch die Düse (2) zu regeln.

9. Vorrichtung nach einem der vorhergehenden Ansprüche, **dadurch gekennzeichnet, dass** der Rückhalterand (6) aus einem Material zusammengesetzt ist, welches der Gruppe bestehend aus Polycarbonat, Acryl, Plexiglas, Plastik, Polyethylen, Polypropylen, Polyester, Polymethacrylat, Poly(1,4-Cyclohexylen Dimethylenterephthalat), Glykol und Metallen entstand.

10. Vorrichtung nach einem der vorhergehenden Ansprüche, **dadurch gekennzeichnet, dass** der Rückhalterand (6) eine Dicke von wenigstens 1 mm aufweist.

11. Vorrichtung nach einem der vorhergehenden Ansprüche, **dadurch gekennzeichnet, dass** ein Gummistreifen (11) zwischen dem Rückhalterand (6) und der Basisplatte (1) an der Außenseite des O-Ringes (12) angeordnet ist.

12. Vorrichtung nach Anspruch 11, **dadurch gekennzeichnet, dass** der elastomere Streifen (11) aus Gummi hergestellt ist.

13. Vorrichtung nach einem der vorhergehenden Ansprüche, **dadurch gekennzeichnet, dass** wenigstens vier Vorsprünge (14) an dem Deckel (13) vorgesehen sind, um den Deckel (13) in Position zu halten.

14. Vorrichtung nach einem der vorhergehenden Ansprüche, **dadurch gekennzeichnet, dass** der Deckel (13) Vorsprünge aufweist, welche eingerichtet sind, um mit der Außenseite der Seitenwände (9) des Rückhalterandes (6) zusammenzuwirken.

## Revendications

1. Dispositif de traitement et de transfert de gels permettant de traiter et de transférer des gels avec un minimum de manipulations **caractérisé en ce que** le dispositif comprend, en combinaison, les éléments suivants :
une plaque de base (1) permettant de maintenir les gels sur une surface supérieure, ladite plaque de base (1) comprenant un tuyau d'écoulement ;
un bord de retenue (6) possédant des parois latérales reliées perpendiculairement à une plaque horizontale (10) de telle sorte que les parois latérales (9) s'étendent verticalement vers le haut à partir de la plaque horizontale (10) et fassent saillie verticalement vers le bas à partir de la plaque horizontale (10), ladite plaque horizontale du bord de retenue (6) étant adaptée pour être fixée par des moyens de fixation (7) au périmètre de la plaque de base (1) pour retenir le gel à l'intérieur de la surface supérieure de la plaque de base. ;
au moins un joint torique (12) prévu dans un endroit créé entre la plaque horizontale (6), les parois latérales (9) et la plaque de base (1) pour apporter une étanchéité ;
un couvercle (13) adapté pour s'engager sur les parois latérales (9), et une extrémité de la plaque de base (1) a la forme d'un biseau pour faciliter le transfert du gel depuis la plaque de base (1) sur une membrane.

2. Dispositif selon la revendication 1, dans lequel la plaque de base (1) est composée d'un matériau choisi dans le groupe constitué par le polycarbonate, l'acrylique, le plexiglas, le verre, le plastique, le polyéthylène, le polypropylène, le polyester, le polyméthacrylate, le poly(1,4-cyclohexylène diméthylène téréphtalate)glycol et les métaux.

3. Dispositif selon la revendication 1 ou la revendication 2, dans lequel la plaque de base (1) a une épaisseur d'au moins 1 mm.

4. Dispositif selon l'une quelconque des revendications précédentes, dans lequel le tuyau d'écoulement comprend un orifice formé dans la plaque de base (1) et une buse (2) fixée à la plaque de base (1) pour entourer l'orifice.

5. Dispositif selon la revendication 4, dans lequel la buse (2) est construite dans un matériau choisi dans le groupe constitué par le polycarbonate, l'acrylique, le plexiglas, le verre, le plastique, le polyéthylène, le polypropylène, le polyester, le polyméthacrylate, le poly(1,4-cyclohexylène diméthylène téréphtalate)glycol et les métaux.

6. Dispositif selon la revendication 4 ou la revendication 5, dans lequel un tuyau (4) est fixé à la buse (2).

7. Dispositif selon la revendication 6, dans lequel le tuyau (4) est composé d'un matériau choisi dans le groupe constitué par le caoutchouc, le latex de caoutchouc, le silicone, le silicone traité au platine pour une pureté élevée et sans peroxyde, le C-Flex qui est un élastomère thermoplastique blanc préparé à partir d'un copolymère bloc de styrène-éthylène-butadiène-styrène, le polyéthylène basse densité, l'éthylène-propylène fluoré, le Téflon, le polytétrafluoréthylène et le silicone.

8. Dispositif selon la revendication 6 ou la revendication 7, dans lequel le tuyau (4) a un diamètre intérieur adapté à la buse (2) et le tuyau (4) est muni d'un collier de serrage pour contrôler l'écoulement de la solution à travers la buse (2).

9. Dispositif selon l'une quelconque des revendications précédentes, dans lequel le bord de retenue est composé d'un matériau choisi dans le groupe constitué par le polycarbonate, l'acrylique, le plexiglas, le plastique, le polyéthylène, le polypropylène, le polyester, le polyméthacrylate, le poly(1,4-cyclohexylène diméthylène téréphtalate)glycol et les métaux.

10. Dispositif selon l'une quelconque des revendications précédentes, dans lequel le bord de retenue a une épaisseur d'au moins 1 mm.

11. Dispositif selon l'une quelconque des revendications précédentes, dans lequel une bande de caoutchouc (11) est située entre le bord de retenue et la plaque de base (1) sur le côté externe du joint torique (12).

12. Dispositif selon la revendication 11, dans lequel la bande élastomère (10) est formée à partir d'un caoutchouc.

13. Dispositif selon l'une quelconque des revendications précédentes, dans lequel au moins quatre protubérances (14) sont fixées au couvercle (13) pour maintenir le couvercle (13) en place.

14. Dispositif selon l'une quelconque des revendications précédentes, dans lequel le couvercle (13) comprend des protubérances adaptées pour s'engager avec l'extérieur des parois latérales du bord de retenue.
